(19) **Europäisches Patentamt**

**European Patent Office**

**Office européen des brevets**

(11) **EP 0 632 469 B1**

(12) **EUROPEAN PATENT SPECIFICATION**

(45) Date of publication and mention
of the grant of the patent:
**20.08.1997 Bulletin 1997/34**

(51) Int Cl.6: **G21C 3/322**, G21C 3/34

(21) Application number: **94109942.6**

(22) Date of filing: **28.06.1994**

(54) **Fuel assembly with reduced risk of dryout**

Kernreaktorbrennelement mit reduziertem Risiko für lokale Aufheizung

Assemblage combustible avec reduction du risque de surchauffe locale

(84) Designated Contracting States:
**CH DE ES LI**

(30) Priority: **30.06.1993 SE 9302252**

(43) Date of publication of application:
**04.01.1995 Bulletin 1995/01**

(73) Proprietor: **ABB ATOM AB**
**S-721 83 Västeras (SE)**

(72) Inventors:
• **Eklund, Rolf**
**S-724 77 Västeras (SE)**

• **Majed, Mahdi**
**S-722 44 Västeräs (SE)**

(74) Representative: **Boecker, Joachim, Dr.-Ing.**
**Adelonstrasse 58**
**65929 Frankfurt am Main (DE)**

(56) References cited:
EP-A- 0 148 452       EP-A- 0 260 602
US-A- 4 804 516       US-A- 5 164 155

## Description

The invention relates to a fuel assembly for reducing the risk of dryout in a boiling water nuclear reactor (BWR) according to the precharacterising part of claim 1.

A reactor core comprises fuel rods kept together into bundles in fuel assemblies. During operation, the fuel rods are cooled by water. To retain and fix the fuel rods in the fuel assembly, spacers are used.

A fuel assembly in a nuclear boiling water reactor consists of an elongated tubular container, often with a rectangular or square cross section, which is open at both ends so as to form a continuous flow passage, through which the cooling water of the reactor may flow. The fuel assembly comprises a large number of equally elongated tubular fuel rods, arranged in parallel in a certain definite, normally symmetrical, pattern. At the top the fuel rods are retained by a top tie plate and at the bottom by a bottom tie plate. To allow coolant to flow past the fuel rods in the desired manner, it is important that they be spaced from each other and prevented from bending or vibrating when the reactor is in operation. For this purpose, a plurality of spacers are used, distributed along the fuel assembly in the longitudinal direction.

Since the cooling water in a boiling water reactor boils, a ratio of water to steam is formed which varies axially in the core. The cooling water flows from the bottom and upwardly in the core. At the bottom of the core, the temperature of the cooling water is lower than its boiling temperature and is thus entirely in liquid phase. Further up, where the coolant reaches the boiling temperature, part of the water is transferred into steam and the coolant is in two phases. The further up in the core, the higher the ratio of steam to water. In the upper part of the core the fuel rods are only covered with a thin film of water, outside of which steam mixed with water droplets is flowing.

If the heat flux from a fuel rod becomes very large in relation to the coolant flow, there may be a risk of so-called dryout occurring, that is, the liquid film becomes so thin that it cannot hold together any more but breaks up and forms dry wall portions. This locally leads to a considerably deteriorated heat transfer between the fuel rod and the cooling water with an ensuing greatly increased wall temperature of the fuel rod. The increased wall temperature may lead to damage with serious consequences arising on the fuel rods. The risk of dryout is greatest at the upper part of the fuel-comprising length of the fuel rods where the percentage of steam is greatest.

A spacer influences the flow of the cooling water and hence the cooling of the fuel. It is known that in a region immediately below the spacer, where the coolant has not yet passed the spacer, a deterioration of the water film on the fuel rod walls occurs, whereas in a region above the spacer, where the coolant has just passed the spacer, a reinforcement of the water film instead occurs. The reinforcement of the water film is due to the turbulence which arises in the coolant when it passes a spacer. The greatest risk of dryout occurs in the upper part of the fuel rod immediately below the spacers. Tests have shown that more closely located spacers in the upper part of the fuel rods result in a considerable reduction of the risk of dryout.

Currently, the most common situation is that the spacers are evenly distributed in the longitudinal direction of the fuel assembly, but it is previously known, among other things from the documents described below, to arrange the spacers at different mutual distances to each other.

EP-0 260 602 A2 describes an intermediate spacer which is placed between the ordinary spacers in the upper part of the fuel to increase the turbulence and thus reduce the risk of dryout. These intermediate spacers lack the supporting function which otherwise characterizes a spacer, and their design is also considerably different from that of the ordinary spacers. From the point of view of production, it is a considerable disadvantage to use two different types of spacers.

EP-0 246 962 B1 describes how a problem with corrosion on the upper parts of the fuel rods, occurring specifically in pressurized water reactors (PWR), is solved by arranging the spacers more closely in the upper part of the fuel. A boiling water reactor does not have similar problems with corrosion in the upper part of the fuel.

US-A-5 164 155 relates to a boiling water reactor which has problems with vibrations in the fuel rods caused by the coolant flow. To reduce these vibrations, the spacers are more closely vertically spaced in the lower part of the fuel rods and more distantly vertically spaced in the upper part of the fuel rods.

In a reactor core, all the fuel is never exchanged at -the same time, but usually about one-fifth of the fuel is exchanged every year, which means that it may take about five years before all the fuel is exchanged. Since new and old fuel are mixed, major changes in the build-up of the fuel may give rise to problems. Changes in the fuel should therefore be as small as possible. In the above-mentioned US patent (column 6, lines 58-68) one of the problems which arise when the distances between the spacers are changed is described. To measure the neutron flux in the reactor core, detectors which move in the vertical direction, so-called TIP, are used. To locate the neutron detectors in the reactor core, the fact that the spacers absorb neutrons and hence cause a minimum in the neutron flux distribution is utilized. The absorption of the spacers must also be taken into consideration when calculating the neutron flux. If the location of the spacers is changed to a considerable extent, this means problems when evaluating the signals from the neutron detectors during the period when refuelling is performed.

The invention aims at developing a fuel assembly for a boiling water nuclear reactor of the above-mentioned kind by which the cooling in the upper part of the fuel is improved and thus the risk of dryout reduced without having to make major changes in the arrangement of the spacers.

To achieve this aim the invention suggestsa fuel assembly according to the introductory part of claim 1, which is characterized by the features of the characterizing part of claim 1.

A further detail of the fuel assembly according to the invention is characterized by the feature of claim 2.

By arranging the spacers according to the invention such that the cooling of the upper part of the fuel rods is improved a reduced risk of dryout is achieved. A reduced risk of dryout means that the fuel can be utilized more efficiently, which results in economical advantages.

By way of example, the invention will now be described in greater detail with reference to the accompanying drawings showing in

Figure 1, in simplified form, a longitudinal section of a fuel assembly according to the prior art, which has six spacers equidistantly spaced from each other,

Figure 2, in simplified form, a longitudinal section of a fuel assembly with spacers arranged according to a first embodiment of the invention,

Figure 3 a perspective view of an example of a spacer for a boiling water reactor,

Figure 4a, in simplified form, a longitudinal section of a fuel assembly according to the prior art, which has seven spacers equidistantly spaced from each other,

Figures 4b and 4c, in simplified form, a longitudinal section of a fuel assembly with spacers arranged according to a second and a third embodiment of the invention,

Figure 5a, in simplified form, a longitudinal section of a fuel assembly according to the prior art, which has eight spacers equidistantly spaced from each other,

Figures 5b and 5c, in simplified form, a longitudinal section of a fuel assembly with spacers arranged according to a fourth and a fifth embodiment of the invention.

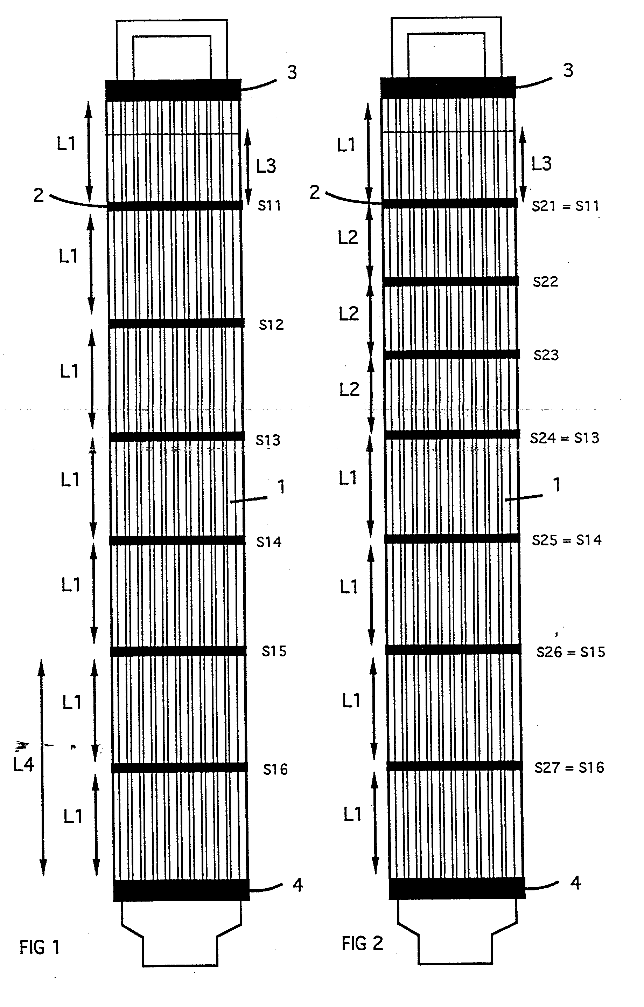

Figure 1 shows a longitudinal section of a prior art fuel assembly for a nuclear reactor. The fuel assembly comprises fuel rods 1, which are retained and fixed by spacers 2, a top tie plate 3, and a bottom tie plate 4. In this embodiment the fuel assembly has six essentially identical spacers which, counting from above, are denoted by numerals S11 to S16. The spacers are placed at practically identical mutual distances L1 between the bottom tie plate and top tie plate. The distance L1 between S11 and the top tie plate corresponds to the distance between two adjacent spacers. In the fuel assembly described in this embodiment, the distance between S16 and the bottom tie plate corresponds to the distance between two adjacent spacers, that is, L1. In another fuel assembly, the distance between the bottom tie plate and the nearest spacer S16 may differ from the distance between two adjacent spacers.

Figure 2 shows a longitudinal section of a fuel assembly with spacers arranged according to the invention. In the following, the spacers will be sequentially denoted by numerals S21 to S27, counting from above. The spacer S12 in Figure 1 has been replaced by two spacers S22 and S23. The two new spacers are essentially identical with the other spacers. The distances between S21 and S22, S22 and S23, S23 and S24 are practically the same and are denoted L2. The ratio of L1 to L2 is the following:

$$L4 \cong 2 \times L1 = 3 \times L2$$

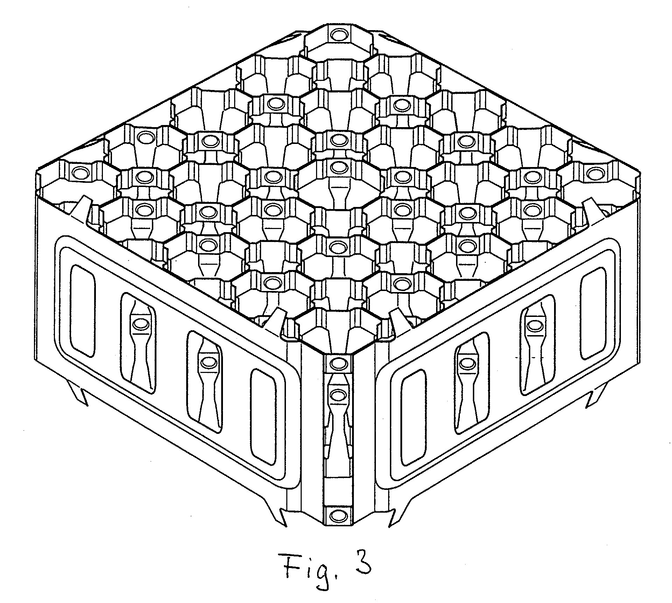

Figure 3 shows a perspective view of one example of a BWR spacer.

A fuel rod comprises an elongated cladding tube sealed at each end by a plug. The cladding tube is filled with a uranium column up to a certain height. Above the uranium column there is an empty volume for collecting gaseous waste products. The distance L3 between the first spacer S11 and the upper end of the uranium column is approximately equal to the distance L2 between the two new spacers ( L3 = L2). Partly because the uranium in the uppermost part of the uranium column usually has a lower enrichment than the uranium at a lower level in the column and partly because of neutron leakage, the effect will be lower and the risk of dryout smaller in the upper part of the fuel rod. This means that it is fully sufficient to replace spacer S12 by two new ones to reduce the risk of dryout in the whole upper part of the fuel assembly.

Achieving more closely arranged spacers in the upper part of the fuel assembly by replacing a spacer by two new spacers means that five out of six spacers will retain their previous location. This facilitates the evaluation of the signals from the movable neutron detectors during the period when the fuel in the reactor core is exchanged. Another advantage of allowing as many spacers as possible to retain their previous locations is that, for dryout testing of new fuel assemblies, only minor reconstruction of the test equipment is required.

In old types of fuel the fuel rods in the assembly are arranged in configurations with a rod density of from 7x7 up to 9x9. In newer types of fuel the assemblies normally have a higher rod density; a normal rod density is 10x10. The fact that the rod density is 10x10 need not mean that the number of fuel rods is 100 but it may be lower since certain positions in the fuel assembly are non-occupied. A 10x10 fuel may also consist of a number of sub-assemblies, for example four 5x5 sub-assemblies. In a 10x10 fuel the number of rods is greater and, in addition, the rods are thinner than the rods in a fuel with a lower rod density. Since the flow channels between the rods become narrower, the distance along the spacer where turbulence remains becomes shorter for an assembly with a high rod density as compared with an assembly with a lower rod density, which in turn entails a greater risk of dryout. The higher the rod density of the fuel, the greater is the need for arranging the spacers more closely together in the upper part of the fuel.

An increased number of spacers gives rise to a higher pressure drop across the fuel. Measurements have shown that also spacers which cause a relatively low pressure drop, such as those shown in Figure 3, give a considerable reduction of the risk of dryout in spite of the fact that they give less turbulence than spacers causing higher pressure drops. This means that spacers causing low pressure drops can be used to advantage in a fuel assembly according to the invention. If spacers which cause a relatively high pressure drop are used, this may have to be compensated, for example by placing spacers causing low pressure drops in the lower part of the fuel, or by increasing the flow area in the bottom tie plate.

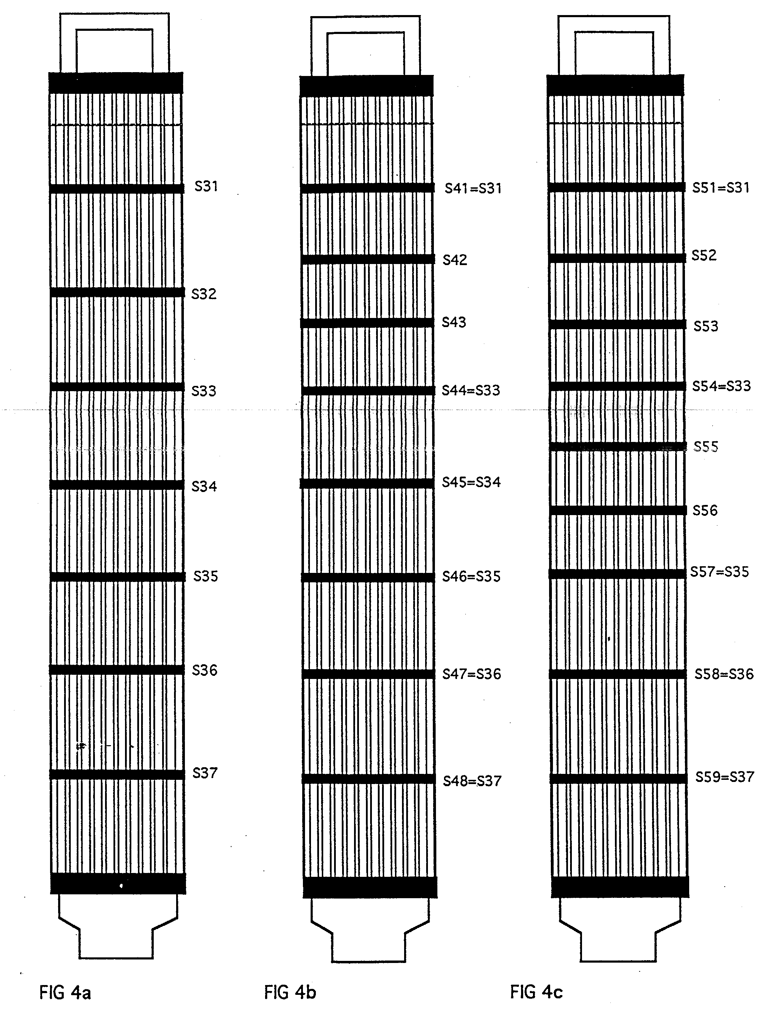

Figure 4a shows a longitudinal section of a prior art fuel assembly for a nuclear reactor comprising seven spacers, practically equally distributed between the bottom tie plate and the top tie plate. The spacers are designated, sequentially from above by the numerals S31 to S37. Figure 4b shows an embodiment of a fuel assembly in which the spacers are designated, counting from above, by the numerals S41 to S48. Spacer S32 in Figure 4a has been replaced in Figure 4b by two new spacers S42 and S43. The two new spacers are essentially identical with the other spacers. The number of spacers in the assembly has then been extended from seven to eight. In Figure 4c, in which the spacers are designated, counting from above, by the numerals S51 to S59, a further spacer S34 has been replaced by two new spacers S55 and S56, which means that the number of spacers in the assembly has now been extended from seven to nine.

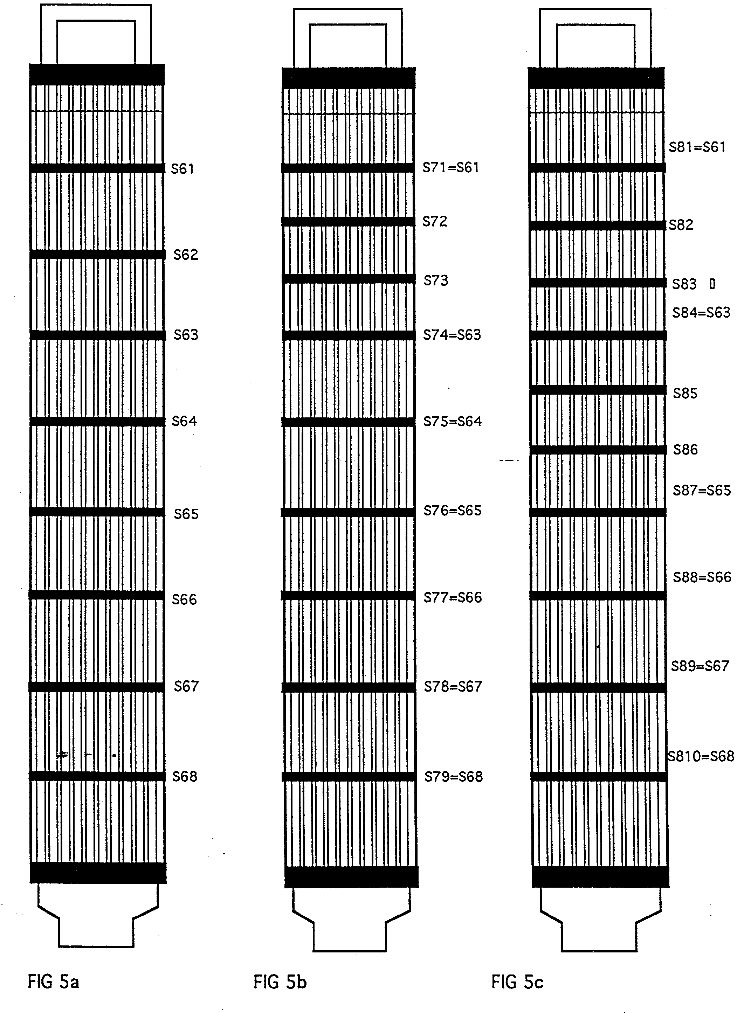

Figure 5a shows a longitudinal section of a prior art fuel assembly for a nuclear reactor comprising eight spacers, practically equally distributed between the bottom tie plate and the top tie plate. The spacers are designated, sequentially from above, by the numerals S61 to S68. Figure 5b shows an embodiment of a fuel assembly in which the spacers are designated, counting from above, by the numerals S71 to S79. Spacer S62 in Figure 5a has thus been replaced in Figure 5b by two new spacers S72 and S73. The-two new spacers are essentially identical with the other spacers. The number of spacers in the assembly has then been extended from eight to nine. In Figure 5c, in which the spacers are designated, counting from above, by the numerals S81 to S810, still another spacer S64 has been replaced by two new spacers S85 and S86, which means that the number of spacers in the assembly has been extended from eight to ten.

**Claims**

1. A fuel assembly for a boiling water nuclear reactor, in which under operation coolant flows upwardly and thereby changes from a single-phase state to a two-phase state, which fuel assembly comprises

   - a top tie plate (3) and a bottom tie plate (4),

   - a number of fuel rods (1) arranged in a bundle therebetween,

   - a number of essentially identical spacers (2) to retain the bundle,

   and which fuel assembly in its axial direction is divided into a plurality of fictitious first sub-lenghts (L1) which correspond to the distance between two adjacent spacers in the lower part of the fuel assembly, wherein two adjoining first sub-lengths constitute a second sub-length (L4), **characterized** in that in at least one second sub-length, which at least for the most part is located in the upper part of the fuel assembly, two of said spacers (S22, S23, S42, S43, S52, S53) are arranged in such a way that they divide said second sub-length into three essentially equally long third sub-lengths (L2).

2. A fuel assembly according to claim 1, **characterized** in that the first sub-length, which is nearest the top tie plate, is exempted from being included in said second sub-length.

## Patentansprüche

1. Brennelement für einen Siedewasserkernreaktor, in welchem beim Betrieb Kühlmittel nach oben strömt und dabei aus einem einphasigen Zustand in einen zweiphasigen Zustand übergeht, zu welchem Brennelement gehören

   - eine obere Verbundplatte (3) und eine untere Verbundplatte (4),

   - eine Anzahl von Brennstäben (1), die in einem Bündel zwischen den Verbundplatten angeordnet sind,

   - eine Anzahl von im wesentlichen identischen Abstandshaltern (2) zum Zusammenhalten des Bündels,

   und welches Brennelement in seiner axialen Richtung in eine Vielzahl von fiktiven ersten Teillängen (L1) unterteilt ist, welche der Entfernung zwischen zwei benachbarten Abstandshaltern im unteren Teil des Brennelements entsprechen, wobei zwei benachbarte erste Teillängen eine zweite Teillänge (L4) bilden, **dadurch gekennzeichnet**, daß in mindestens einer zweiten Teillänge, die zumindest überwiegend im oberen Teil des Brennelements liegt, zwei der genannten Abstandshalter (S22, S23, S42, S52, S53) in einer solchen Weise angeordnet sind, daß sie die genannte zweite Teillänge in drei im wesentlichen gleich lange dritte Teillängen (L2) unterteilen.

2. Brennelement nach Anspruch 1, **dadurch gekennzeichnet**, daß die erste Teillänge, die am dichtesten an der oberen Verbundplatte liegt, von der Zugehörigkeit zu der genannten zweiten Teillänge ausgenommen ist.

## Revendications

1. Assemblage combustible pour un réacteur nucléaire à eau bouillante, dans lequel, en fonctionnement, des fluides de refroidissement s'écoulent vers le haut et passent ainsi d'un état monophasé à un état à deux phases, cet assemblage combustible comportant ;

   - un embout (3) supérieur et un embout (4) inférieur,
   - un certain nombre de crayons (1) combustibles disposés en faisceau entre les embouts
   - un certain nombre d'entretoises (2) sensiblement identiques pour supporter le faisceau,

   cet assemblage combustible étant divisé, suivant sa direction axiale, en une pluralité de premières sous longueurs (L1) fictives qui correspondent à la distance entre deux entretoises adjacentes dans la partie inférieure de l'assemblage combustible, deux premières sous-longueurs adjacentes constituant une seconde sous-longueur (L4),
   caractérisé en ce que dans au moins une seconde sous-longueur, qui est située, au moins pour la plus grande partie, dans la partie supérieure de l'assemblage combustible, deux des entretoises (S22,S23, S42, S43,S52, S53) sont disposées de manière à diviser la seconde sous-longueur en trois troisièmes sous-longueurs (L2) de longueurs sensiblement égales.

2. Assemblage combustible suivant la revendication 1, caractérisé en ce que la première sous-longueur, qui est la plus proche de l'embout supérieur, peut ne pas être incluse dans la seconde sous-longueur.

FIG 1

FIG 2

Fig. 3

FIG 4a        FIG 4b        FIG 4c

S31    S41=S31    S51=S31

S42    S52

S32    S43    S53

S33    S44=S33    S54=S33

S55

S34    S45=S34    S56

S35    S46=S35    S57=S35

S36    S47=S36    S58=S36

S37    S48=S37    S59=S37

FIG 5a　　　　FIG 5b　　　　FIG 5c